Europäisches Patentamt

European Patent Office

Office européen des brevets

(19)

(11) Publication number: 0 137 698
A2

(12) **EUROPEAN PATENT APPLICATION**

(21) Application number: 84305901.5

(22) Date of filing: 29.08.84

(51) Int. Cl.⁴: **B 01 D 13/04**

(30) Priority: 29.08.83 US 526992

(43) Date of publication of application:
17.04.85 Bulletin 85/16

(84) Designated Contracting States:
DE FR GB IT

(71) Applicant: Exxon Research and Engineering Company
P.O.Box 390 180 Park Avenue
Florham Park New Jersey 07932(US)

(72) Inventor: Hafez, Mahmoud Mostafa
1278 Willa Drive
Sarnia Ontario, N7S 1T7(CA)

(72) Inventor: Koenitzer, Bernard Alfred
1368 Ascot Circle
Sarnia Ontario, N7S 4B3(CA)

(74) Representative: Somers, Harold Arnold et al,
ESSO Engineering (Europe) Ltd. Patents & Licences Apex
Tower High Street
New Malden Surrey KT3 4DJ(GB)

(54) Method of preswelling of regenerated cellulose membranes for organic separations and the use thereof.

(57) A method for preswelling and drying hydrophilic regenerated cellulose membranes involving solvent exchange with a hydrogen bond breaking hygroscopic polar solvent followed by drying. The resulting membrane can be directly used without further treatment for polar organic liquid permeation such as polar dewaxing solvents from dewaxed oil. Preferred hydroscopic polar solvents are dimethylsulphoxide (DMSO), dimethylformamide (DMF), n-methyl pyrollidone (NMP), other disubstituted sulphoxides, disubstituted sulphones, other disubstituted formamides and dimethylamine (DMA) and morpholine. Most preferred solvent is DMSO.

The method of the present invention is useful not only for pretreating fresh membrane material but also for recovering the permeability of damaged membranes (i.e. dried, water damaged or pressure damaged membranes).

# DESCRIPTION OF THE INVENTION

The present invention is directed to the preswelling of hydrophilic regenerated cellulose membranes to render them suitable for use in organic liquid separation processes, preferably polar organic liquid separation processes, particularly the separation of polar dewaxing solvents (such as methyl ethyl ketone/methyl isobutyl ketone [MEK/MIBK] from dewaxed oil. The membrane is contacted with a polar organic solvent possessing a specified range of solubility parameters ($\delta$'s). The polar organic solvents of choice also possess a preferred range of melting points. When the solvent is sulfolane or DMSO, the regenerated cellulose membrane so treated can be dried and stored at low temperature ($\leq 20^{\circ}C$) and subsequently employed in polar liquid separation applications without further pretreatment. Solvents which can be used in the present invention are characterized by being miscible with water and by having the three dimensional solubility parameters $\delta h$ (hydrogen bonding), $\delta p$ (dipolar interaction) and $\delta d$ (dispersion forces) within the limits of $3.5 \leq \delta h \leq 6.0$; $1.0 \leq \delta p$ 9.0; (the magnitude of $\delta d$ is not critical) wherein all $\delta$'s are in $[cal/cc]^{1/2}$ and may be selected, for example, from tetrahydrofuran, disubstituted sulphoxides, e.g., dimethyl sulphoxide (DMSO), sulfolane, disubstituted formamides, e.g., dimethyl formamide (DMF), n-methyl pyrollidone (NMP), disubstituted sulphones, dimethylamine and morpholine. Solvents preferably also have very low vapor pressure at ambient temperature. This allows the swollen membrane to be stored at that temperature without solvent loss. Quantitatively a melting point $10^{\circ}C < Mpt < 50^{\circ}C$ is desirable. Most preferred solvent is sulfolane or DMSO. Contacting of the regenerated cellulose with the solvent is preferably conducted under conditions of ambient temperature and pressure.

The treating method of the present invention may be practiced on fresh regenerated cellulose membranes and also on previously used membranes which have lost their ability to permeate organic liquids due to drying, or exposure to water, or due to matrix collapse resulting from extreme chemical or physical conditions (e.g., exposure to non-polar solvents and/or exposure to excessive pressure). Such membranes recover their ability to permeate and regain selectivity after treatment in accordance with the present invention.

There are a number of distinct advantages of the present method over prior treatment methods. Regenerated cellulose membranes preconditioned with sulfolane or DMSO may be dried, stored and subsequently used without further preconditioning.

Sulfolane and DMSO are especially well-suited for this particular treatment because their vapor pressures at room temperature are negligible. The membrane can be rendered useful for organic liquid separation, preferably polar organic liquid separation, after the use of a single solvent pretreatment under atmospheric pressure, i.e., pressure permeation of the pretreating solvent through the membrane is not required. Preconditioning is accomplished in a relatively short time, i.e., minutes rather than hours and at low temperature.

The regenerated cellulose membranes treated by the procedure of the present invention possess high flux and high selectivity for organic liquid separations, and are especially suited for and useful in polar organic liquid separation, the most preferred separation being the recovery of polar organic dewaxing solvents from dewaxed oil in dewaxing operations the membrane showing high oil rejection and high dewaxing solvent (e.g. ketone) permeability.

BACKGROUND OF THE INVENTION

Membrane separation processes generally operate under a pressure driving force, i.e., reverse osmosis and ultrafiltration, but concentration driving force can also be employed, i.e., dialysis or perevaporation.

Semipermeable membranes, especially regenerated cellulose, have been used quite extensively to effect aqueous system separations in the food, pharmaceutical, medicinal (i.e., artificial kidney dialysis), drug, mining, etc. industries. Such membranes are hydrophilic in nature and generally perform aqueous separations satisfactorily without extensive pretreatment. While separations of small concentrations of organic molecules from aqueous systems have employed hydrophilic membranes, organic system separations require hydrophobic (or less hydrophilic) membranes.

Separation of mixtures of organic molecules (in particular, organic liquids) is usually more difficult than aqueous systems because most desired organic separations involve molecules that are similar in molecular size and shape, solvent power, vapor pressure, etc. For these separations non-porous hydrophobic polymeric films (i.e., films that do not contain pores) have traditionally been claimed. See, e.g., U. S.

Patent 2,960,462, U. S. Patent 2,930,754, U. S. Patent 2,958,656, U. S. Patent 2,985,657, U. S. Patent 2,947,687. U. S. Patent 3,370,102, U. S. Patent 3,556,991, U. S. Patent 3,225,107, U. S. Patent 3,223,614 and U. S. Patent 3,228,876. In those instances the process is driven by concentration differences and selectivity is due to the different diffusion rates of the components of the system through the polymer. This last mechanism of molecular transport is known as diffusive prevaporation. Separations of azeotropic and close boiling liquids by such membranes have also been investigated. See, e.g., U. S. Patent 2,970,106, U. S. Patent 3,043,891 and U. S. Patent 2,958,656.

In dealing with hydrophilic membranes in general and regenerated cellulose membranes in particular, the very nature of the membranes is such as to make it unattractive, if not in fact inoperable, for organic liquid separations unless it is first converted to a suitable form by pretreatment.

Regenerated cellulose is the term given to cellulose precipitated from a chemically dissolved native cellulose. It is also referred to as cellulose II and is different from native cellulose (cellulose I) in having a lower molecular weight (degree of polymerization), less molecular entanglement, less degree of crystallinity, as well as being allotropically different in the crystalline region (unit cell having different dimensions than native or cellulose I).

Regenerated cellulose was first prepared by denitrating cellulose nitrate, according to U. S. Patent 264,987. This process has been commercialized and extended to the hydrolysis of cellulose acetate as described by U. S. Patent 2,445,333 and U. S. Patent 2,451,768. However, the most common manufacturing methods for commercial production are the viscose and the cupramonium methods. In the viscose process cellulose is regenerated from cellulose xanthate solution as described in U. S. Patent 981,368 and 991,267 and German offen 413,511. Regenerated cellulose membranes prepared by this process are called "celluphane". The cupramonium process regenerates cellulose in a similar manner to the viscose process from its soluble copper complex formed by reacting with ammoniacal copper sulphate, according to U. S. Patents 2,035,645 and 2,067,522. The regenerated cellulose membranes prepared by this process are called "Cuprophane".

The most recent method of preparing regenerated cellulose uses cupriethylene diamine to dissolve the cellulose by complex formation. The resulting solution is used to regenerate cellulose in the normal manner according to (V.K. Kulshrestha and W.J. Kolff. J.P.S. 297, 1970). Membranes prepared this way are called "Cuenophane".

Other methods of dissolving cellulose by complex formation have been cited in the prior art, e.g., dissolution in $SO_2$+ ethylene diamine + DMSO or DMSO + Paraformaldehyde at 95-100°C] (see "DMSO/ Paraformaldehyde; a Nondegrading Solvent for Cellulose", Johnson, Nicholson and Haigh, Applied Polymer Symposium, Series 28, 931-943, 1976; "The Solution and Regeneration of Cellulose Using Novel Solvent Systems", Guthrie and Hardcastle, Polymer 18, pgs. 203-04, Feb. 1977; and "Cellulose Solvents", Turbak, et al., Chemtech, pg. 51-57, Jan. 1980).

Irrespective of the method of preparation, all forms of regenerated cellulose are essentially the same having similar properties, with average thicknesses from $<5$ $\mu$M up to 300 $\mu$M, and equivalent average pore radius of about 21 $\overset{\circ}{A}$ and a molecular weight cut off [MWCO] of about 10,000 to 12,000. The parameter "MWCO" is a standard ultrafiltration measure denoting the size of pores capable of $>99\%$ rejection of protein molecules in aqueous systems where they coil up in spherical form.

Cuprophane and cuenophane have higher fluxes than celluphane because they are more amorphous (i.e., have less crystalline structure) and are more porous respectively.

Because of its pore size, regenerated cellulose is very useful for, and have found extensive use in, hemodyalysis and hemofiltration to purify blood of toxines in the artificial kidney.

All regenerated cellulose membranes, like most other membranes, cannot be dried. If dried the membrane's internal structure collapses by intra chain hydrogen bonding. These membranes must be kept wet at all times. This is not a problem, and it has been handled very efficiently in these membranes as well as cellulose acetate membranes. A method to preswell regenerated cellulose by Glycerol so that the membrane can be handled dry and directly permeate water is described in U.K. Patent 1,349,394 and U.K. Patent 1,240,560.

In the U.K. patents, regenerated cellulose membranes are first swollen with water. The membranes are then treated with a 10% solution of glycerol. After drying, the glycerol remaining behind and maintains the pore structure through strong hydrogen bonding.

The idea of swelling regenerated cellulose has also been studied in the textile industry to dye fibers and cloths made of regenerated cellulose. It has been observed that swelling of fibers enhances the interaction with dyes. For water soluble dyes swelling with water is sufficient. Organic soluble dyes require the swelling of cellulose by organic solvents, such as DMF, DMSO, methanol, etc., as is described by B. Philipp, et al. (Faser Forschung, Textil Tech. 24(3), 106, 1973) and A. Borbely-Kuszmann, et al. (Kolor. Ert. 17 (1), 295, 1975). In these papers the effect of swelling time and temperature of various organic solvents on the properties of fibers and films of cellulose was studied.

So in summary regenerated cellulose membranes are prepared by three main methods to produce very similar membranes called Celluphane, Cuprophane and Cuenophane respectively. All membranes have similar average pore radius of ~20 Å and could vary in thickness from <5 $\mu$M to 300 $\mu$M and must be kept wet at all times. The most important use of that membrane is in hemodyalysis and hemofiltration.

When intended for use in aqueous system separations the regenerated cellulose could often times be pretreated so as to modify its separation characteristics, (to increase permeability and selectivity). Modifications for aqueous systems include:

i) increasing permeability by decreasing thickness or by increasing membrane porosity, or by increasing membrane porosity, or by increasing average pore size. For example T. H. Melza and coworkers (Trans. Am. Soc. Artif. Int. Organs, $\underline{9}$, 12, 1968) disclose that reducing the molecular weight of the cellulose polymer increases membrane porosity and permeation.

J. Morton and coworkers (U. S. Gov. Report, 907, 1970, Office of Saline Water Research, Washington, D.C.) disclose a method to prepare very thin membranes of very high permeation. He and Van Oss also disclose methods of treating regenerated cellulose membranes with 1% boiling NaOH or oxidation with $Br_2$ in 0.5% solution $NaCO_3$ or with concentrated solutions (64%) of $ZnCl_2$ to increase the membrane pore size. However, these treatments are also known to reduce the mechanical strength of the membranes.

ii) increasing selectivity for (rejection of) a given species by reducing the average pore size.

For example in J. Phys. Chem. $\underline{65}$, 166, 1967 Craig uses undirectional mechanical stretching of membranes to reduce their pore size thus increasing their rejection of given molecules. He also discloses that two dimensional stretching results in larger pore sizes.

In addition, modifications to impart mechanical strength have also been disclosed where polyvinylalcohol (PVA), polypropylene-glycol (PPG) or mineral oil are added to the casting solution, and result in the formation of films of superior mechanical properties.

These modifications reported in the prior art deal with increasing permeability and/or selectivity for aqueous system processing, and it is important to note that increasing permeability is always accompanied by reduction in selectivity and vice versa. These modifications, although useful in understanding the structure and function of the membrane do not suggest or explain how they or other treatments could be used to condition regenerated cellulose membranes for use in nonaqueous systems.

In _Progress in Separation and Purification_, Vol. 3, Perry and Van Oss, eds, p. 105-106, p. 122-124, Wiley-Interscience, 1970, it is stated that in order to _impregnate_ a hydrophilic membrane with a water immiscible liquid (i.e., a hydrocarbon or organic liquid) the membrane has to be soaked in a series of successive baths of the following compositions: 30% water-70% ethanol, 5% water, 45% ethanol-50% butanol (renewed 3 times) 70% butanol-30% oil, 30% butanol-70% oil, 100% oil. Cellophane (or regenerated cellulose) as such could not be impregnated with any nonaqueous liquid that was tried unless it was first treated with concentrated $ZnCl_2$ to enlarge the pores.

In U. S. Patent 4,368,112 and European patent application publication #EP 13,834 it is revealed that regenerated cellulose can be rendered useable for organic liquid separations by permeating the membrane, under pressure, sequentially with a series of solvents of decreasing polarity wherein the first solvent in the series is miscible with the water in the regenerated cellulose membrane and is also miscible with the next succeeding solvent in the series, and wherein each solvent in the series exhibits bulk liquid-liquid miscibility with each preceding and succeeding solvent and wherein the last solvent is miscible with the organic liquid to be permeated through the membrane. The procedure does not require the use of concentrated $ZnCl_2$ and this is a distinct advantage since the use of concentrated aqueous $ZnCl_2$ increases the pore size resulting in a decrease in selectivity and causes weakening of the membrane.

PRESENT INVENTION

It has been discovered that hydrophilic regenerated cellulose membranes can be pretreated so as to preswell them and thereby render them useful in organic liquid separation processes, especially the separation of polar organic liquids from non-polars, most particularly polar dewaxing solvents (such as methyl ethylketone (MEK), acetone, methyl isobutyl ketone (MIBK), mixtures of MEK/MIBK, MEK/Toluene etc.) from dewaxed oil. The procedure involves contacting (i.e. solvent exchanging) the membrane with a polar organic solvent, which is also miscible with water and is characterized by having the three dimensional solubility parameters, $\delta h$ (hydrogen bonding), $\delta p$ (dipolar interaction) and $\delta d$ (dispersion forces) within the limits $3.5 \leq \delta h \leq 6.0$; $2.0 \leq \delta p \leq 9.0$ (the magnitude of $\delta d$ is not critical) wherein all $\delta$'s are in $[cal/cc]^{1/2}$. Preferably, $\delta h$ is about 3.9 to about 5.5 while $\delta p$ is about 2.5 to about 8.5. Some solvents which satisfy the requirements recited above and function in the present invention are disubstituted sulphides, especially DMSO, disubstituted sulphones, dimethylamine, n-methyl pyrollidone (NMP), sulfolane, disubstituted formamides (DMF), tetrahydrofuran and morpholine. The solvents of choice are sulfolane and DMSO. This solvent exchange need not be under applied pressure; atmospheric pressure conditions are sufficient. Contacting time is on the order of minutes. Further, the procedure of the present invention is applicable not only to fresh membranes, but with certain limitations described in detail below can be used to restore damaged membranes, i.e., membranes which have lost their ability to permeate polar organic liquids due to exposure to water or which have collapsed due to prolonged exposure to non-polar hydrocarbon liquids or which have suffered compression damage or drying.

Water damaged membranes are of particular interest because regenerated cellulose membranes pretreated to convert them from hydrophilic to hydrophobic as by the procedure of the present method when exposed to water wet solvents suffer a dramatic drop in permeability due to the fact that water adsorbs preferentially to the membrane and retards solvent permeation. Contacting the water damaged membrane with a polar organic solvent, preferably DMSO, in accordance with the method of the present invention restores its permeation capacity. It has been also found that treatment with mixtures of a polar solvent as herein described, such as DMSO, with the solvent being separated such as ketone, are able to restore permeation capacity. Such mixtures, however, were found to be effective only when used under pressure permeation conditions, however applied pressures would need larger contacting times while with higher applied pressures shorter contacting times should suffice. While the sequential pressure permeation procedure of EP 13834 will restore most of the lost permeation capacity, it is a lengthy, involved procedure as compared to the preferred one step, single solvent procedure of the present invention.

Further, if a regenerated cellulose membrane pretreated so as to separate polar organic liquids is subject to extremely high pressure shocks e.g., >800 psi, the membrane matrix starts to collapse and, depending on the pressure and the length of exposure to pressure, the permeation rate of the membrane can be significantly reduced. In this case again it has been found that contact with polar organic solvents as described herein, preferably DMSO, was sufficient to restore total permeability. In this case it was not possible to use solvent mixtures such as the ketone-DMSO mixtures mentioned above, to restore total permeability, and it was also not possible to recover any permeability even using the previously described multi step procedure.

Regenerated cellulose membranes, regardless of the use to which they are to be put (be it aqueous or non-aqueous organic liquid permeation) lose permeability upon drying. This drying of regenerated cellulose has always been considered irreversible. The organic liquid, especially ketone permeability of dried regenerated cellulose membranes can be restored by treating with DMSO. Because of the similarity in solubility parameter between DMSO and sulfolane, it is anticipated that sulfolane should behave similarly DMSO in restoring permeation regenerated cellulose membranes damaged due to drying. Regenerated cellulose membranes which have been pretreated with DMSO can be dried without the loss of their ability to selectively permeate organic liquids such as ketones. Such membranes can be used without further preconditioning.

Again, due to the similarity in solubility parameters between DMSO and sulfone regenerated cellulose membranes pretreated with sulfolane should also be driable and useable without further preconditioning.

The regenerated cellulose membranes pretreated by the techniques described in this specification employing the polar solvents as herein described, preferably DMSO, can be used most effectively for the recovery of polar dewaxing solvents employed in solvent dewaxing of waxy hydrocarbon oils, preferably waxy petroleum oils, most preferably waxy lube, transformer, or other specialty oils such as white oil.

Waxy hydrocarbon streams are solvent dewaxed employing any one of a number of different processes. Representative, non-limiting examples include solvent dewaxing processes employing indirect heat exchange in a scraped-surface chiller wherein waxy oil and solvent, at approximately the same temperature, are mixed in such a manner so as to effect complete and thorough solution of the oil in the solvent before being cooled or chilled. This solution is then cooled at a uniform, slow rate under conditions which avoid agitation of the solution as the wax precipitates out.

Another well-known method of solvent dewaxing involves conventional, incremental solvent addition. In this method, solvent is added to the oil at several points along a chilling apparatus. However, the waxy oil is first chilled with solvent until some wax crystallization has occurred and the mixture has thickened considerably. A first increment of solvent is introduced at this point in order to maintain fluidity, cooling continues and more wax is precipitated. A second increment of solvent is added to maintain fluidity. This process is repeated until the desired oil-wax filtration temperature is reached, at which point an additional amount of solvent is added in order to reduce the viscosity of the mixture to that desired for the filtration step. In this method the temperature of the incrementally added solvent should also be about the same as that of the wax/oil/solvent mixture at the point of introduction. If the solvent is introduced at a lower temperature, shock chilling of the slurry usually occurs, resulting in the formation of small and/or acicula shaped wax crystals with attendant poor filter rate.

Still another well-known process is the DILCHILL[R] process wherein waxy oil is introduced into an elongated, staged cooling zone or tower at a temperature above its cloud point and incrementally introducing cold dewaxing solvent into said zone, along a plurality of points or stages therein, while maintaining a high degree of agitation so as to effect substantially instantaneous mixing of the solvent and wax/oil mixture as they progress through said zone and resulting in the precipitation of at least a portion of the wax present in the waxy oil. The basic concept is shown in U. S. Patent No. 3,773,650 while a modification thereof which employs the aforementioned high agitation direct chilling zone augmented by a subsequent, separate and distinct scraped surface indirect chilling zone is presented in U. S. Patent 3,775,288, the disclosures of both of which are incorporated herein by reference.

---

[R]Registered service mark of Exxon Research and Engineering Company.

Any solvent useful for dewaxing waxy hydrocarbon oil stocks may be used in the process. Representative examples of such solvents are (a) the aliphatic ketones having from 3 to 6 carbon atoms, such as acetone, methyl ethyl ketone (MEK) and methyl isobutyl ketone (MIBK), and (b) mixtures of the aforesaid ketones with $C_6$-$C_{10}$ aromatics such as benzene, xylene and toluene. In addition, halogenated, low molecular weight hydrocarbons such as the $C_1$-$C_4$ chlorinated hydrocarbons, e.g., dichloromethane, dichloroethane, and mixtures thereof, may be used as solvents either alone or in admixture with any of the aforementioned solvents. Preferred solvents are MEK/MIBK and MEK/toluene.

The solvent dewaxing of any waxy hydrocarbon oil stock, preferably waxy petroleum oil stock or distillate fraction thereof, more preferably waxy lube oil, transformer oil, white oil or fuel oil stocks may be dewaxed employing any of the dewaxing processes previously recited or otherwise practiced in the art may be improved by using the membrane solvent recovery procedure described herein. Illustrative, non-limiting examples of waxy stocks are (a) distillate fractions that have a boiling range within the broad range of about 500°F to about 1300°F, with preferred stocks including the lubricating oil and specialty oil fractions boiling within the range of between about 50°F and 1200°F, (b) bright stocks and deasphalted resids having an initial boiling point about 800°F, and (c) broad cut feedstocks that are produced by topping or distilling the lightest material off a crude oil leaving a broad cut oil, the major portion of which boils above about 500°F or 650°F. Additionally, any of these feeds may be hydrocracked prior to distilling, dewaxing or topping. The distillate fractions may come from any source such as the paraffinic crudes obtained from Aramco, Kuwait, the Pan Handle, North Louisiana, etc., naphthenic crudes, such as Tia Juana, Coastal crudes, etc., as well as the relatively heavy feedstocks, such as bright stocks having a boiling range of 1050+°F and synthetic feedstocks derived from Athabasca Tar Sands, shale, etc.

The solvent recovery process employs the regenerated cellulose membrane in the preconditioned state, that is,,after conversion from the hydrophilic into the hydrophobic state. This is accomplished by exposure of the regenerated cellulose membrane to the polar organic solvents described herein.

Dewaxing solvent recovery is practiced by contacting the mixture of dewaxing solvent and dewaxed oil (after removal of the precipitated wax therefrom by liquid/solid separation procedures such as filtration, centrifugation, settling/decanting, etc.) with one side of the preconditioned regenerated cellulose membrane, under pressure sufficient to overcome the osmotic pressure of the solvent in the solvent/oil mixture, to form a permeate richer in the dewaxing solvent than the original mixture. The permeate dewaxing solvent recovered by this procedure can be recycled back to the dewaxing operation with the other process streams being handled in accordance with further processing procedures common in the art.

The preconditioned membrane may be employed in any convenient form including sheets, bundles of hollow fibers, tubes, etc. formed into elements, for example, as bundles of tubes or fibers as described, for example, in U. S. Patent No. 3,228,877, or sheet material fabricated into spiral wound element configurations as described for example in U. S. Patent No. 3,417,870, U. S. Patent No. 3,173,867, U. S. Patent No. 3,367,594, U. S. Patent No. 3,386,583, and U. S. Patent No. 3,397,790.

In the practice of the separation of dewaxing solvent containing ketone from dewaxed oil the membrane preferably will be employed in the form of a spirally wound membrane element. In fabricating such spiral wound elements various adhesives, spacers, backings, seals, etc. are employed. The spiral wound element comprises layers of regenerated cellulose membrane wound around a metal central tube containing holes for the permeate, the membrane layers being separated by alternate layers of a permeate carrier, knitted Simplex (Dacron, with melamine formaldehyde stiffener) and a feed spacer made of Vexar (a polypropylene mesh). Membrane layers are sealed using an epoxy adhesive to sandwich the permeate carrier into a closed envelope in fluid communication with the peforated central tube leaving the perforations in the central tube as the only permeate outlet. The epoxy adhesive comprises a ketone resistant resin formulation comprising for example, (1) Epon 828 which is a reaction product of bisphenol-A and epichlorohydrin (2) Cabosil M5, (3) Versamid 140 (a polyamide curing agent) (4) Estane 5707F-1 (a polyurethane from B. F. Goodrich) and (5) DMF solvent wherein the components 1/2/3/4/5 are present in a relationship based on parts by weight of about 100/10/60/4/12, which cures at about 25°C over about a 21 day period. This adhesive system is described and claimed in copending European patent application No. 84303215.2. The layers of membrane, permeate carrier and feed spacer were wound around the central tube in a fashion consistent with preparing a spiral wound element. After the element is cured, the ends of the element are trimmed; a nylon seal carrier and a nylon anti-telescoping device are then added. The element is then covered on the outside with an epoxy reinforced fiberglass outer wrap. The membrane herein either before or after fabrication into element form.

The scope of the present invention will be better understood by reference to the following Examples which are presented solely as illustration and are not to be taken as limitations on the present invention. In these examples the pretreated regenerated cellulose membrane is used for separating polar dewaxing solvents (in particular ketones, eg MEK, MIBK) from dewaxed oil. Such membranes can also be used, however, for separation of polar organic solvents from other nonpolar organic molecules. The procedure could equally well apply to prepare membranes for aqueous systems separation.

EXAMPLES

Example 1: Softening Procedure of RC Membranes

This example shows the softening procedure of RC membranes by various solvents and also shows the response to storage of preswollen membranes in terms of MEK permeation.

A fresh water wet sample of RC membranes (ENKA, PM 250, about 10,000 MWCO, 17.5 $\mu$m thick) was solvent exchanged with DMSO by immersion for 30 minutes at room temperature. The membrane was then blotted dry and again immersed for 5 minutes and then blotted dry and stored in a plastic bag.

Membranes softened with DMSO and stored for 24, 48, 72, 168 and 2880 hours, as well as membranes pretreated with sulfolane, THF morpholine and methanol were tested for ketone permeation at about 22°C and 2750 kpd (~400 psi). The results are listed below:

Table 1

| Storage Time hrs. | Solvent | MPT °C | Solubility Parameters | | | MEK Permeation 1/m² day |
|---|---|---|---|---|---|---|
| | | | $\delta_h$ | $\delta_p$ | $\delta_d$ | |
| 0 | DMSO | +18 | 5.0 | 8.0 | 9.0 | 630 |
| 24 | DMSO | | | | | 630 |
| 48 | DMSO | | | | | 625 |
| 72 | DMSO | | | | | 630 |
| 168 | DMSO | | | | | 600 |
| 2880 | DMSO | | | | | 625 |
| 0 | Sulpholane | +27 | 5.1 | 8.4 | 9.1 | 640 |
| 0 | THF | -65 | 3.9 | 2.8 | 8.2 | 360 |
| 0 | Morpholine | -75 | 4.5 | 2.4 | 9.2 | 615 |
| 0 | MEOH | -79 | 10.9 | 6.0 | 7.4 | 0 |

Example 2: Comparison between Glycerol DMSO and Sulfolane Softened Regenerated Cellulose Membranes

Two fresh samples of regenerated cellulose membranes (ENKA, PM 250, about 10,000 MWCO, 17.5 $\mu$ ) were tested. One was tested as such (i.e. glycerol softened) while the other was softened with DMSO for 10 minutes at 22°C $\pm$ 3°C according to example 1 and then tested. The two samples were tested for MEK permeation at 22°C and 2750 kPa.

Table 2

Regenerated Cellulose Membrane Performance

| Ketone Permeation ( $\ell/m^2$ day) | Glycerol Softened | DMSO Softened | Sulfolane Softened |
|---|---|---|---|
| | 0.00 | 632 | 630 |

This example illustrates that the old manufacturing procedure is not adequate for preparing polar organic permeable regenerated cellulose membranes.

Example 3: Performance of DMSO Softened Membranes in Ketones-Dewaxed Oil Separation

A sample of regenerated cellulose membrane (ENKA, PM 250, MWCO 10,000, 17.5 $\mu$ thick) was softened in DMSO according to the procedure of Example 1. The softened membrane was tested for separating ketones (MEK/MIBK) from their mixture with dewaxed oils.

On a mixture of 24.8% dewaxed oil (150N) in (60/40) of (MIBK/MEK), the performance of the DMSO softened membrane at 22°C and 2750 kPa was as follows:

Table 3

| Ketone Permeation (Pure MEK Example 2) | 632 | $\ell/m^2$ day |
|---|---|---|
| Solution Permeation | 230 | $\ell/m^2$ day |
| Oil in Permeate | 5.7% | |
| % Rejection | 82% | |

It can be seen that the membrane has very good separation characteristics for this system.

Example 4: Use of DMSO Procedure to Recover Water Damaged Membranes

A. Ketone-oil mixtures may get contaminated with water. Water contamination in excess of 1% reduces regenerated cellulose membrane permeability to a significant extent because it potentially adsorbs in the membrane thereby offering considerable resistance to solvent (ketone) permeation. It is therefore of great practical importance to be able to recover membranes permeation by the procedure of Example 1 after water contamination.

A fresh membrane sample was softened with DMSO according to the procedure of Example 1. It was then tested with feed mixtures of compositions in the range from about 25-35% as shown in Table 4 following the procedure of Example 3. Water in amounts ranging from about 1-5% was added to the feed mixture thereby impairing the permeation. The membrane was then flushed with methyl ethyl ketone and treated with DMSO according to Example 1 and then retested on three feeds to show complete recovery of permeation.

Table 4

DMSO Treated RC Membrane

| Feed Solution | Oil In Feed % | Oil In Permeate % | Permeation Rate $J=1/m^2$ day | | Selectivity |
|---|---|---|---|---|---|
| | | | Experimental | Calculated | |
| Ketone (Base – Example 2) | 0 | 0 | .632 | (630) | – |
| Solution MEK/MIBK/150N Oil | 25.0 | 5.8 | 230 | (228) | 0.82 |
| Solution MEK/MIBK/150N Oil 0.7 vol% $H_2O$ | 25.0 | 5.8 | 160 | (228) | 0.82 |
| Solution MEK/MIBK/150N Oil 5 vol% $H_2O$ | 25.0 | 5.8 | <5 | (228) | 0.82 |
| DMSO Treatment (Solvent Exchange) 10 min. | | | | | |
| Solution MEK/MIBK/150N Oil | 27.4 | 6.4 | 250 | (204) | 0.81 |
| Solution MEK/MIBK/150N Oil | 32.3 | 7.2 | 200 | (173) | 0.82 |
| Solution MEK/MIBK/150N Oil | 35.2 | 7.3 | 176 | (110) | 0.82 |

0137698

Table 4 gives a sample summary of the above steps. The water contamination step was repeated several times showing in each case that DMSO treatment completely restores flux. Decline in permeation due to exposure of the membrane to a non-polar solvent, e.g. heptane are expected also to be reversable by resoftening the membrane with DMSO. It can be thus concluded that water and non-polar solvent damaged membranes can be treated by DMSO to restore polar solvent permeability.

In the case of mixed solvents solvent exchange under permeation conditions is necessary. For example the pressure solvent exchange with methanol, then ketone, does about the same in accordance with the general procedure previously described but in a much longer time.

Mixtures of DMSO/Ketone containing as little as about 60% DMSO can also be used under permeation (pressure) conditions. This is shown in Table 5 wherein a regenerated cellulose membrane was treated with 1% water according to the procedure previously outlined in Example 4, whereupon the membrane lost most of its permeability. The membrane was then solvent exchanged with mixtures of DMSO/MEK (60% DMSO) without any applied pressure and also at 400 psi (2750 kPa) for 30 minutes at room temperature. From this it is seen that pressurized exchange completely restored permeation and flux to the level of the previously reported runs of the Example.

It can therefore be concluded that mixtures of DMSO/MEK with DMSO preferably >50% can also restore the permeation of water damaged membranes by pressurized solvent exchange.

## Table 5

### DMSO/MEK MIXTURE TREATMENT OF WATER DAMAGED RC MEMBRANES
### Temperature 22°C

| Feed | Oil in Feed.% | Oil in Permeate % | Permeation Rate $J = 1/m^2$ day Experimental | (Calculated) | Selectivity | Pressure (PSI) |
|---|---|---|---|---|---|---|
| Ketone Base-(Example 2) | 0.0 | 0.0 | 630 | (630) | – | 400 |
| Solution MEK/MIBK/150N Oil | 24.6 | 5.1 | 236 | (240) | 0.82 | 400 |
| Solution MEK/MIBK/150N Oil + 1 vol% $H_2O$ Added | 24.7 | 5.0 | 147 | (240) | 0.82 | 400 |
| Recovery Mixture A DMSO/MEK (60/40) | 0.0 | 0.0 | – | | – | 0.0+ |
| Solution MEK/MIBK/150N Oil | 25.0 | 5.4 | 140 | (240) | 0.82 | 400 |
| Recovery Mixture B DMSO/MEK 60/40 | – | – | 450 | (440) | 0.0 | 400 |
| Solution MEK/MIBK/150N Oil | 25.0 | 5.4 | 250 | (240) | 0.82 | 400 |

B. Another sample of regenerated cellulose (Enka PM 250) was pretreated using sulfolane then tested for straight ketone (MEK) permeation at 400 psi, ambient temperature. This membrane was then damaged by egraser to wet solvent and then recovered by unpressurized soaking in sulfolane. The results are presented below:

| Membrane | Fresh | Damaged by Water | Solvent Exchanged With Sulfolane |
|---|---|---|---|
| Ketone (MEK) flux $1/m^2d$ | 600 | 0 | 540 |

It is seen that ketone (MEK) flux of the membrane was substantially recovered after water damage by solvent exchange with sulfolane.

Example 5A: Recovery of Regenerated Cellulose Membranes from Extreme Pressure Compaction

In this example it is shown how membranes which have been severely compacted by exposure to extreme pressures >10,000 kPa, can be recovered by DMSO solvent exchange.

Regenerated cellulose is made up of a three dimensional matrix of cellulosic chains of various but narrow range of molecular weights. The chains are randomly connected through hydrogen bonding forming a three dimensional network of tortous paths. Although the membrane structure is very strong and stable, extremely high pressure can disturb the equilibrium resulting in membrane collapse (compaction) and loss of permeation.

Fresh membrane samples [Enka; PM 250, 10,000 MWCO; 17.5 μ thick, wet] were prepared for organic liquid permeation according to procedures of Example 1 and also by water soak followed by pressure permeation using methanol for 1 hr. at 400 psi, 23°C then MEK for 1 hr. at 400 psi, 23°C. Membrane samples were subject to pressures in the range of 8,000 to 10,000 kPa, for various periods of times resulting in permeation loss of up to 94% (from 630 L/m$^2$ day down to 14 L/m$^2$ day).

Both membranes were thereupon treated with methanol and then ketone under pressurized solvent exchange conditions which resulted in no gain in permeation!

Both membranes were also solvent exchanged with DMSO according to Example 1 whereupon the permeation was restored to the original level.

Membranes were also treated with DMF after pressure compaction but could only recover to about 65 to 80% of the original values.

These results are summarized below from a sample experiment carried out at room temperature.

| Operation | Membrane Permeation (L/m² day) | |
| --- | --- | --- |
| | DMSO Treated | MEOH/MEK Treated* |
| Ketone at 2750 kPa | 625 | 600 |
| Ketone at 8000 kPa | 14+ | 25+ |
| | | |
| Treatment pressurized solvent exchange using MEOH and MEK Ketone at 2750 kPa | 14 | 25 |
| | | |
| Treatment with DMSO for 20 min solvent exchange | | |
| Ketone at 2750 kPa | 630 | 630 |
| New Membrane | | |
| Ketone at 2750 KPa | 630 | 635 |
| Ketone at 10,000 KPa | 1.1 | 4 |
| | | |
| Treatment with DMF for 30 min solvent exchange | | |
| Ketone at 2750 kPa | 504 | 420 |

---

+ declined to that value over the period of 2 hrs.

* water soak followed by 1 hr. Methanol at 400 psi, 23°C then 1 hr. MEK at 400 psi, 23°C.

It can be concluded from this example that pressure collapsed membranes that have lost their permeability can be effectively, quickly and completely recovered by solvent exchange with DMSO.

To a lesser extent the membrane can be recovered by DMF. To a still lesser extent the membrane can partially recover permeation using other specified solvents. However the recovery is not enough to consider these other solvents useful.

Example 5B: Recovery of Regenerated Cellulose Membranes -From Pressure Evaporation and Drying Damage

A sample of regenerated cellulose (Enka PM 250) which had been pretreated using DMSO was subjected to elevated pressure and then allowed to dry out. This doubly damaged membrane was then recovered using DMSO. The fresh, damaged and recovered membrane was evaluated on straight MEK at 400 psi, ambient temperature for ketone flux performance. The results are presented below:

| Membrane | Fresh | Pressure Damaged | Dried | Recovered Using DMSO |
|---|---|---|---|---|
| Ketone (MEK) Flux $1/m^2d$ | 630 | 60 + 20 | Not measured | 600 |

- 30a -

In this patent specification,

temperatures in °F are converted to °C by subtracting 32 and then dividing by 1.8.

pressures in pounds per square inch (psi) are converted to kPa by multiplying by 6.895.

$\overset{\circ}{A}$ = 1 x $10^{-10}$m

cc = $cm^3$

cal = calorie.  4.184 calories = 1J RC is an abbreviation for "regenerated cellulose".

CLAIMS :

1.        A method for pretreating regenerated cellulose membranes for the separation of organic liquids, which method comprises contacting said membrane with a polar organic solvent possessing solubility parameters in the ranges; $3.5 \leq \delta h \leq 6.0$; $1.0 \leq \delta p \leq 9.0$ wherein said solubility parameters are in $(\text{calories}/\text{cm}^3)^{1/2}$.

2.        The method of claim 1 wherein the polar organic solvent used is tetrahydrofuran, disubstituted sulphoxides, sulfolane, disubstituted formamides, n-methyl-pyrollidone, disubstituted sulphones and dimethylamine.

3.        The method of claim 1 or claim 2 wherein the pretreated regenerated cellulose membrane prepared by contacting said membrane with the polar organic solvent selected from DMSO or sulfolane is further permitted to dry.

4.        A method for recovering or restoring the organic liquid permeation capacity of previously treated regenerated cellulose membranes which have lost their permeation capacity due to exposure to water which recovery method comprises contacting said regenerated cellulose membrane with a polar organic solvent possessing solubility parameter values in the following ranges ; $3.5 \leq \delta h \leq 6.0$; $1.0 \leq \delta p \leq 9.0$, wherein said solubility parameters are in $(\text{cal}/\text{cm}^3)^{1/2}$.

5. The method of claim 4 wherein the polar organic solvent comprises a mixture of DMSO and ketone wherein the DMSO is present as at least 50% of the mixture and wherein the contacting is conducted under pressure permeation conditions.

6. The method of claim 4 or claim 5 wherein the contacting is conducted at a pressure of about 400 psi (about 2758 kPa).

7. A method for recovering or restoring the organic liquid permeation capacity of previously treated regenerated cellulose membranes which have lost their permeation capacity due to membrane compaction resulting from exposure to elevated pressure, which recovery method comprises contacting said pressure damaged membrane with a polar organic solvent possessing solubility parameter values in the following ranges; $3.5 \leq \delta h \geq 6.0$; $1.0 \leq \delta p \leq 9.0$, wherein said solubility parameters in $(cal/cm^3)^{1/2}$.

8. The method of claim 7 wherein the polar organic solvent is DMSO or DMF.

9. A method for recovering or restoring the organic liquid permeation capacity of previously treated regenerated cellulose membranes which have lost their permeation capacity due to drying, which recovery method comprises contacting said dried membrane with DMSO or sulfolane.

10.     A method for separating polar organic dewaxing solvents from dewaxed oil comprising contacting at least a portion of the polar organic dewaxing solvent/dewaxed oil mixture, under pressure, with one side of at least one membrane made from regenerated cellulose to form a permeate richer in said solvent than said mixture and a retentate leaner in said solvent than said mixture wherein said regenerated cellulose is pretreated for said separation by solvent exchanging the membrane with a polar organic solvent possessing solubility parameters in the ranges : $3.5 \le \delta h \le 6.0$; $1.0 \le \delta p \le 9.0$, wherein said solubility parameters are in $(cal/cm^3)^{1/2}$.

11.     The method of any one of claims 2, 4 or 10 wherein the polar organic solvent is DMSO or sulfolane.